# EUROPÄISCHE PATENTSCHRIFT

(11) **EP 2 653 790 B1**
(45) Veröffentlichungstag und Bekanntmachung des Hinweises auf die Patenterteilung: **27.06.2018**
(21) Anmeldenummer: 13001976.3
(22) Anmeldetag: 16.04.2013
(51) Int. Cl.: F24D 3/14, B65H 49/32, B25B 27/00

(54) **Vorrichtung für die Montage eines Rohres in einer Nut eines Wärmeleitprofils**
Device for mounting a tube in a groove of a thermal conduction profile
Dispositif destiné au montage d'un tube dans une rainure d'un profil conducteur de chaleur

(30) Priorität: 19.04.2012 AT 4812012
(43) Veröffentlichungstag der Anmeldung: 23.10.2013
(73) Patentinhaber: Peer, Robert, 2381 Laab im Walde (AT)
(72) Erfinder: Peer, Robert, 2381 Laab im Walde (AT)

(56) Entgegenhaltungen:
- WO-A1-2004/104484
- US-A1- 2004 107 558
- US-A1- 2004 258 480
- US-B1- 6 340 271

## Beschreibung

Die Erfindung betrifft eine Vorrichtung für die Montage eines Rohres in einer Nut eines Wärmeleitprofils.

Die erfindungsgemäße Vorrichtung ist vor allem an Wärmeleitprofilen anwendbar, welche Teil einer Decke oder eine Wand sind und in fertigem Zustand mit Gipskartonplatten verkleidet sind. Im normalen Einsatzfall kommt eine erfindungsgemäße Vorrichtung dann zum Einsatz, wenn Wärmeleitprofile schon an einer Decke oder Wand montiert sind und mit Rohren versehen werden müssen, bevor sie mit Gipskartonplatten verkleidet werden.

Die Schriften DE 10 2004 057 384 B1, DE 198 03 114 C2, DE 201 06 884 U1, EP 733 866 A2 und WO 2010121283 A2 zeigen Wärmeleitprofile welche zwei Nuten aufweisen deren Querschnittsfläche etwa die Form eines Kreisabschnittes aufweist, dessen Mittelpunktswinkel knapp mehr als 180° beträgt. Durch elastisches Aufweiten der Nutöffnungen - durch elastisches Biegen der die jeweilige Nut begrenzenden Profilwand - ist jeweils ein Rundrohr, welches ein Wärmeträgermedium führen kann, in eine Nut einklemmenbar. Der Vorgang des Eindrückens eines Rohres in eine Nut des Wärmeleitprofils bei dafür gleichzeitig erforderlichem elastischem Verformen des Wärmeleitprofils und/oder des Rohres ist - sofern nicht vorgefertigte Gesamtelemente verwendet werden, bei denen die Rohrstücke nachträglich verbunden werden müssen - eine kraftaufwendige, mühevolle und zeitraubende Handarbeit.

Die der Erfindung zu Grunde liegende Aufgabe besteht darin, eine Vorrichtung zu schaffen, mit Hilfe derer die Montage eines Rohres in einer Nut eines schon an einer Wand oder Decke eines Gebäudes montierten Wärmeleitprofils vereinfacht wird.

Für das Lösen der Aufgaben wird die Vorrichtung nach Anspruch 1 vorgeschlagen. Die Vorrichtung ist bevorzugt mit einem zwei gegenüberliegende offene Flächen aufweisenden Gehäuse und diesem gegenüber drehbaren Rollen auszustatten, wobei die Rollrichtung der Rollen parallel zur Profilrichtung des Wärmeleitprofils ausgerichtet ist. Die Erfindung wird an Hand von Zeichnungen veranschaulicht.
- Fig. 1:: zeigt in Teilschnittansicht eine Prinzipskizze einer ersten erfindungsgemäßen Montagevorrichtung im Einsatz. Die Blickrichtung liegt dabei parallel zur Profilrichtung des Wärmeleitprofils.
- Fig. 2:: zeigt in Teilschnittansicht eine Prinzipskizze einer zweiten erfindungsgemäßen Montagevorrichtung im Einsatz. Die Blickrichtung liegt horizontal, normal zur Profilrichtung des Wärmeleitprofils.
- Fig. 3:: zeigt in Profilansicht das Wärmeleitprofil von Fig. 1 einschließlich einem darin eingeklemmten Rohr.
- Fig. 4 und 5:: zeigen in Profilansicht einen Ausschnitt eines zweiten bzw. weiteren Wärmeleitprofils an welchem eine erfindungsgemäße Vorrichtung auch gut anwendbar ist.

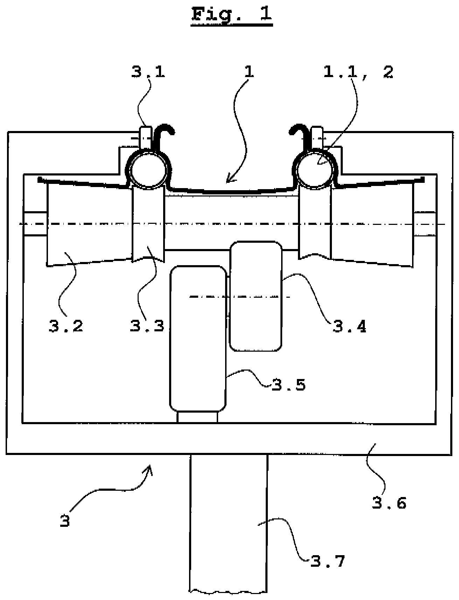

Die Montagevorrichtung 3 gemäß Fig. 1 weißt je Nut 1.1 des Wärmeleitprofils 1 in welche ein Rohr 2 einzuklemmen ist, mindestens drei Rollen 3.1, 3.2 3,3 auf, deren Rollrichtung parallel zur Profilrichtung des Wärmeleitprofils 1 ausgerichtet ist.

Die beiden Rollen 3.1, 3.2 sind in einem Axialabstand zueinander angeordnet und drücken mit ihren Mantelflächen bezüglich der Ebene der Öffnung der Nut 1.1 von unterschiedlichen Seiten her an das Wärmeleitprofil 1 an. Dadurch wird der im Nahbereich dieses Rollenpaares befindliche Längsabschnitt einer Nut 1.1 aufgeweitet, sodass ihre Öffnungsfläche dort zumindest annähernd so breit wird wie der Durchmesser des Rohres 2 wenn dieses nicht verformt ist.

Die Mantelfläche der dritten Rolle 3.3 ist tailliert ausgeführt und sie ragt an die Öffnungsfläche der Nut 1.1. Das Rohr 2 verläuft an der der Nut 1.1 zugewandten Seite der Mantelfläche der Rolle 3.3.

Indem die ganze Montagevorrichtung 3 in Profilrichtung des Wärmeleitprofils 1 bewegt wird, drückt die Rolle 3.3 den an ihr befindlichen Längsbereich des Rohrs 2 in die Nut 1.1, deren Flanken an diesem Längsbereich durch die Rollen 3.1, 3.2 gegenüber dem unverformten Zustand elastisch aufgeweitet sind.

In dem in Fig. 1 dargestellten Beispiel sind die Rollen 3.2 und 3.3 auf einer gemeinsamen Achse angeordnet, zu einem gemeinsamen Rollenkörper zusammengefasst und motorisch angetrieben. Der Antrieb beinhaltet einen Motor 3.5 und ein von diesem angetriebenes Reibrad 3.4 welches mit seiner Umfangsfläche an dem besagten Rollenkörper anliegt. Antrieb und Rollen sind in einem etwa C-förmigen Gehäuse 3.6 gehalten, welches seinerseits an einem Stiel 3.7 gehalten ist, durch welchen hindurch auch die Energiezufuhr für den Antrieb verläuft. Durch den Stiel 3.7 kann die Vorrichtung durch einen Menschen gehalten und geführt werden und an ein schon an der Decke eines Raumes aufgehängtes Wärmeleitprofil 1 angesetzt werden.

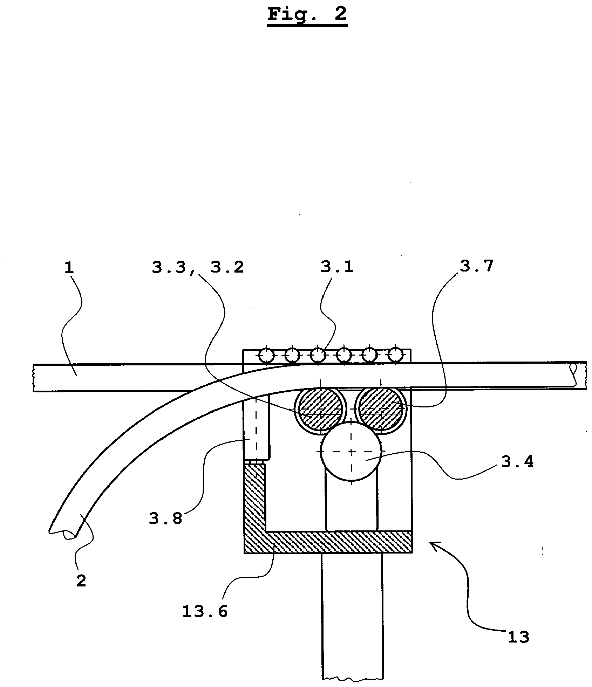

Bestimmungsgemäß bewegt sich die erfindungsgemäße Vorrichtung 13 von Fig. 2 gemäß Fig. 2 von rechts nach links. Die Vorrichtung 13 ist gegenüber jener von Fig. 1 um zusätzliche Rollen ergänzt.

An der Oberseite des Wärmeleitprofils rollt eine ganze Reihe von hintereinander angeordneten Rollen 3.1.

Genau hinter der Rolle 3.3, welche das Rohr 2 in die Nut am Wärmeleitprofil einführt und welche mit der Rolle 3.2 die von unten her an das Wärmeleitprofil andrückt, läuft eine weitere Rolle 3.7, welche ebenfalls eine taillierte Mantelfläche aufweist. Die Rolle 3.7 drückt an einem solchen Längsbereich von der Seite der Nutöffnung des Wärmeleitprofils her an das dort in der Nut befindliche Rohr 2, an welchem die Öffnungsbreite der Nut am Wärmeleitprofil gegenüber dem maximal aufgeweiteten Zustand schon wieder etwas verengt ist. Die Rolle 3.7 stellt damit sicher, dass das Rohr 2 ganz in die Nut eingebracht wird.

Ein Satz von Rollen 3.8 ist bezüglich der Bewegungsrichtung der Vorrichtung 13 am Wärmeleitprofil 1 vor der Rolle 3.3 angeordnet, durch welche das Rohr 2 in die Nut am Wärmeleitprofil eingebracht wird. An den Mantelflächen dieser zusätzlichen Rollen 3.8, deren Drehachsen nicht parallel zu den schon besprochenen Rollen liegen müssen, wird bestimmungsgemäß ein noch nicht in die Nut am Wärmeleitprofil eingeklemmter Längsbereich des einzuklemmenden Rohres 2 ihn Ort und Richtung für die weitere Verarbeitung optimierend ausgerichtet.

Indem bezüglich der Profilrichtung des Wärmeleitprofils 1 mehrere Rollen 3.1 bzw. 3.3, 3.7 hintereinanderliegend am Rohr 2 bzw. am Wärmeleitprofil anliegen, ist die Ausrichtung der Vorrichtung 13 um Schwenkachsen, welche bezüglich des Wärmeleitprofils parallel zur Verbindungsebene mit einer Gipskartonplatte (in Fig. 2 horizontal) und normal zur Profilrichtung liegen besser definiert als wenn das nicht der Fall wäre.

Die erfindungsgemäße Vorrichtung ist besonders gut an Wärmeleitprofilen anwendbar, welche so ausgebildet sind, dass die für die Aufnahme jeweils eines Rohres dienenden Nuten besonders leicht elastisch aufweitbar sind um das Rohr einzubringen.

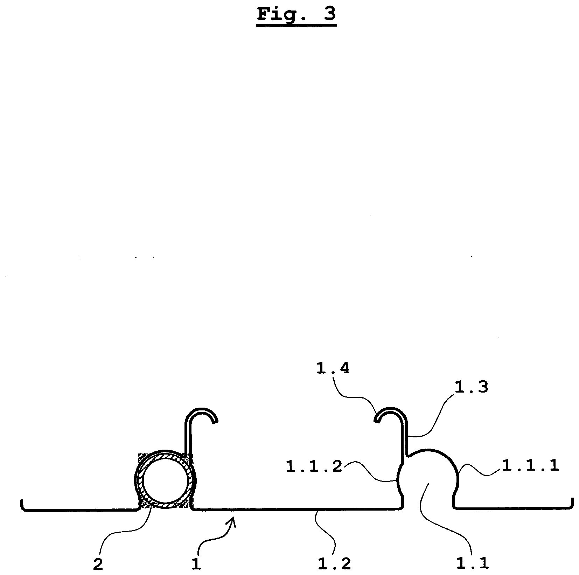

Das kann gemäß dem Profilbeispiel von Fig. 3 besonders gut damit erreicht werden, dass jene Wand des Wärmeleitprofils 1 welche als Begrenzung der Nut 1.1 an dem einzuklemmenden Rohr 2 anliegt durch zwei Teilstücke 1.1.1, 1.1.2 des Wärmeleitprofils 1 gebildet ist, welche an der bestimmungsgemäßen Berührungsfläche zum Rohr 2 nicht miteinander verbunden sind, sondern durch solche Flächenbereiche 1.3, 1.4 des Wärmeleitprofils, welche von der bestimmungsgemäßen Berührungsfläche zum Rohr abstehen, wobei diese Flächenbereiche 1.3, 1.4 aus zumindest zwei Schichten bestehen, welche nur an einem von der Nut 1.1 entfernt liegenden Längsbereich unmittelbar miteinander verbunden sind. Das Wärmeleitprofil gemäß Fig. 3 ist einfach durch Walzprofilieren eines Blechbandes herstellbar.

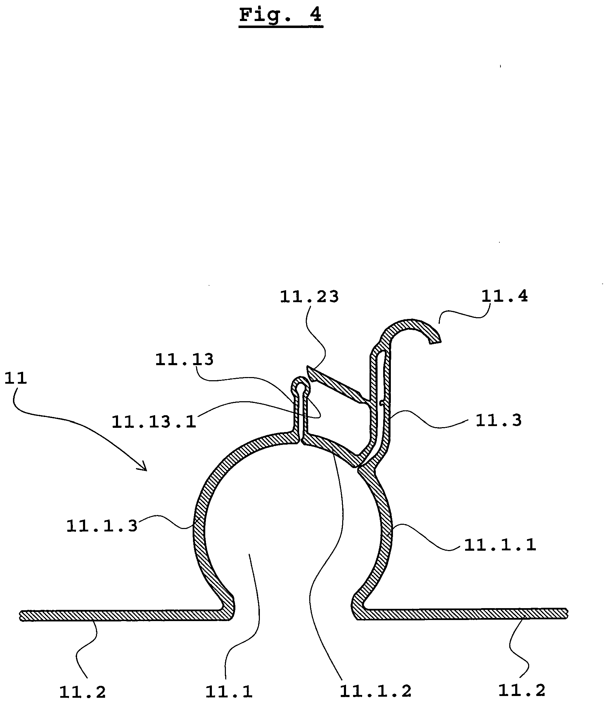

Fig. 4 zeigt einen Ausschnitt eines Wärmeleitprofils 13 welches gut durch Strangpressen von Aluminium herstellbar ist. Es weist zwei jeweils zweischichtige Wandbereiche 11.3, 11.13 auf, welche von der Nut 11.1 die für die Aufnahme eines Rohres bestimmt ist, abstehen, und die Begrenzung der Nut 11.1 in drei Flächenbereiche 11.1.1, 11.1.2, 11.1.3 aufteilen, indem der schmale Spalt zwischen den beiden Schichten eines Wandbereichs 11.3, 11.13 in die Nut 11.1 mündet. Gegenüber einer Aufteilung der Nutbegrenzung in nur zwei Teilflächen (wie in Fig. 3 skizziert) wird durch die Aufteilung der Nutbegrenzung in drei Teilflächen die Öffnung der Nut 11.1 weiter und weicher elastisch aufdehnbar.

Darüber hinaus weist das Wärmeleitprofil 13 eine Profilwand 11.23 auf, welche von dem Wandbereich 11.3 absteht und knapp über das freie Ende des Wandbereichs 11.13 ragt. Mit dem Wandbereich 11.3 ist die Profilwand 11.23 nur über einen sehr dünnen Steg verbunden, sodass die Profilwand 11.23 gegenüber dem Wandbereich 11.13 durch plastische Verformung des dünnen Steges ohne große Mühe schwenkbar ist.

Bestimmungsgemäß wird dann, wenn ein Rohr mit einer erfindungsgemäßen Vorrichtung in die Nut 11.1 eingebracht wurde, die Profilwand 11.23 um den schmalen Verbindungssteg zum Wandbereich 11.3 nach unten geschwenkt, sodass sie mit ihrem freien Ende auf das freie Ende des Wandbereichs 11.13 trifft, an diesem abgleitet, dabei den Wandbereich 11.13 etwas vom Wandbereich 11.3 weg biegt und schließlich an einem Winkelbereich 11.13.1 des Wandbereichs verrastet. Der Vorgang des Schwenkens der Profilwand 11.23 kann durch eine weitere Rolle einer erfindungsgemäßen Vorrichtung erreicht werden, welche hinter den Rollen, welche das Einlegen des Rohres bewirken angeordnet ist und von oberhalb auf die Profilwand 11.23 drückt. Indem durch die Profilwand 11.23 die beiden Wandbereiche 11.13, 11.3 etwas voneinander weggebogen werden, entsteht jeweils ein Drehmoment zwischen dem mittleren Flächenbereich 11.1.2 und den äußeren Flächenbereichen 11.1.1 bzw. 11.1.3 der Begrenzungsflächen der Nut 11.1, durch welchen die Nut 11.1 verengt wird. Bei in der Nut 11.1 befindlichem Rohr kommt es dadurch zu einem besseren Kontakt zwischen dem Rohr und den Begrenzungsflächen der Nut.

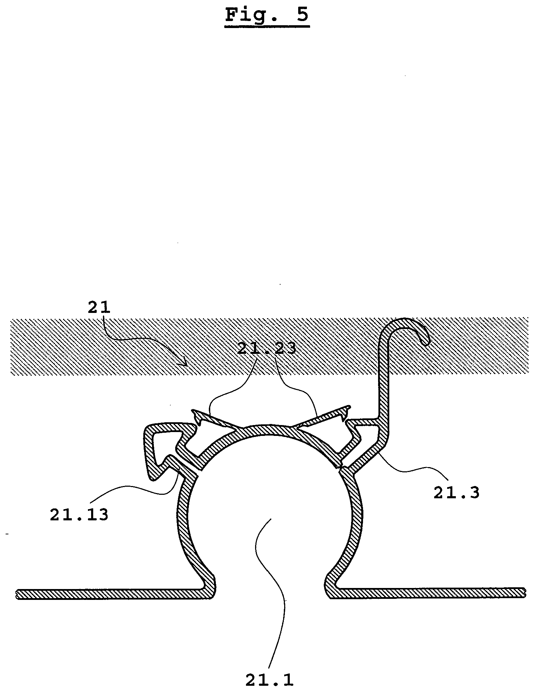

Fig. 5 zeigt einen Ausschnitt eines weiteren Wärmeleitprofils 21 welches auch gut durch Strangpressen von Aluminium herstellbar ist und an welchem erfindungsgemäße Vorrichtungen gut anwendbar sind. Auch dieses Wärmeleitprofil weist zwei zweischichtige Wandbereiche 21.3, 21.13 durch welche die Begrenzungsfläche der Nut 21.1 in welche ein Rohr einzuklemmen ist in drei Teilflächen aufgeteilt wird. Das Wärmeleitprofil weist zwei Profilwände 21.23 aus, welche von der Außenseite der mittleren Begrenzungsfläche der Nut 21.1 in den Nahbereich von jeweils einem zweischichtigen Wandbereich 21.3, 21.13 ragen. Bestimmungsgemäß werden dann, wenn ein Rohr in die Nut 21.1 eingebracht wurde die beiden Wandbereiche 21.23 durch mechanische Einwirkung um ihre Verbindungsstelle mit der Begrenzungsfläche der Nut 21.1 so gebogen, dass sie mit ihrem freien Ende an den jeweiligen Wandbereich 21.3, 21.13 anstoßen, diesen etwas ausbiegen und dabei an dem Wandbereich 21.3 bzw. 21.13 einrasten. Bei in der Nut 21.1 befindlichem Rohr kommt es dadurch zu einem besseren Kontakt zwischen dem Rohr und den Begrenzungsflächen der Nut.

Das Biegen der Wandbereiche 21.23 kann auch durch eine erfindungsgemäße Vorrichtung erfolgen. An den Beispielen gemäß Fig. 1 und Fig. 2 wären dafür die Rollen 3.1 so schmal auszuführen, dass sie zwischen den Fußpunkten der Profilwände 21.23 an der Außenseite der Begrenzungsfläche der Nut 21.1 Platz finden. Bezüglich der Bewegungsrichtung der Vorrichtung hinter den Rollen 3.1 ist in etwa auf gleicher Höhe und mit zu den Achsen der Rollen 3.1 paralleler Achsausrichtung eine weitere Rolle anzubringen. Durch diese weitere Rolle müssen die Profilwände 21.23 in der besprochenen Weise umgebogen werden. Dazu muss diese weitere Rolle so lang sein, dass sie an einem von den Fußpunkten der Profilwände 21.23 entfernt liegenden Wandbereich dieses Profilwände anliegt und sie dort nach unten drückt.

Gegenüber dem Profil 11 von Fig. 4 ist das Profil 21 von Fig. 5 noch besser für die Anwendung einer erfindungsgemäßen Vorrichtung geeignet.

In einer nicht dargestellten Ausführung einer erfindungsgemäßen Vorrichtung kann eine Rollen, welche das Aufweiten der Öffnung der Nut bewirkt gegenüber jener Rolle mit taillierter Mantelfläche, durch welche ein Rohr in eine Nut des Wärmeleitprofils eingebracht wird, bezüglich der Fortbewegungsrichtung der Vorrichtung am Wärmeleitprofil etwas weiter vorne liegen. Damit wird das Einbringen des Rohres in die Nut erleichtert. (Der damit verbunden Nachteil ist, dass um die Vorrichtung an einer Decke anwenden zu können, ein größerer Mindestabstand zwischen den Stirnseiten der Wärmeleitprofile und den die Decke tragenden Wänden erforderlich ist.)

In einer weiteren, nicht dargestellten Ausführungsform einer erfindungsgemäßen Vorrichtung kann ein zusätzlicher Satz von Rollen vorgesehen sein, welcher an der Vorrichtung hinter den schon besprochenen Rollensätzen angeordnet ist und dazu dient, etwaige unerwünschte plastische Verformungen des Wärmeleitprofils und/oder des Rohres, die durch den vorderen Rollensatz verursacht wurden, wieder rückgängig zu machen.

## Patentansprüche

1. Vorrichtung (3, 13) für die Montage eines Rohres (2) in einer Nut (1.1, 11.1, 21.1) eines Wärmeleitprofils (1, 11, 21) durch abschnittsweise Bewegen von Längsabschnitten des Rohres (2) normal zu seiner Längsrichtung und normal zur Profilrichtung des Wärmeleitprofils (1) in die Nut (1.1, 11.1, 21.1) hinein,
wobei die Vorrichtung (3, 13) eine Rolle (3.3) aufweist, deren Mantelfläche tailliert ist und an die Öffnungsfläche der Nut (1.1, 11.1, 21.1) heranragt und wobei bei der Montage das in die Nut (1.1, 11.1, 21.1) einzubringende Rohr (2) an der der Nut (1.1, 11.1, 21.1) zugewandten Seite der taillierten Mantelfläche dieser Rolle (3.3) anliegt,
**dadurch gekennzeichnet, dass**
- die Vorrichtung (3, 13) ein Gehäuse (3.6) aufweist, durch welches das Wärmeleitprofils (1, 11, 21) in seiner Profilrichtung hindurchführbar ist und an welchem weitere Rollen (3.1, 3.2) um Achsen, welche zur Profilrichtung des Wärmeleitprofils normal liegen, drehbar gelagert sind, wobei
- mindestens zwei dieser weiteren Rollen (3.1, 3.2) an voneinander beabstandeten Querschnittsflächenbereichen des Wärmeleitprofils ((1, 11, 21) an dem Wärmeleitprofils (1, 11, 21) unter Druck anliegen und eine Biegekraft um zur Profilrichtung parallel liegende Biegeachsen auf das Wärmeleitprofil (1, 11, 21) ausüben durch welche die Öffnung der Nut (1.1, 11.1, 21.1) erweitert wird.

2. Vorrichtung nach Anspruch 1, **dadurch gekennzeichnet, dass** jene Rollen, welche eine Biegekraft auf das Wärmeleitprofil ausüben, gegenüber jener Rolle an welcher das in die Nut einzubringende Rohr (2) anliegt, in Fortbewegungsrichtung der Vorrichtung am Wärmeleitprofils weiter vorne liegen.

3. Vorrichtung nach Anspruch 1 oder Anspruch 2, **dadurch gekennzeichnet, dass** hinter der Rolle (3.3) eine weitere Rolle (3.7) mit taillierter Mantelfläche in die Nut (1.1) am Wärmeleitprofil (1) ragt.

4. Vorrichtung nach einem der Ansprüche 1 bis 3, **dadurch gekennzeichnet, dass** Rollen (3.8) in Bewegungsrichtung der Vorrichtung (13) am Wärmeleitprofils (1) vor der Rolle (3.3) angeordnet sind, durch welche das Rohr (2) in die Nut am Wärmeleitprofils eingebracht wird und dass an Mantelflächen dieser Rollen (3.8) ein noch nicht in die Nut (11.1) am Wärmeleitprofil (11) eingebrachter Längsabschnitt des Rohres (2) anliegt.

5. Vorrichtung nach einem der Ansprüche 1 bis 4, **dadurch gekennzeichnet, dass** eine oder mehrere Rollen (3.1, 3.2) welche an das Wärmeleitprofils (1) andrücken gegenüber dem Gehäuse (3.6) motorisch angetrieben um ihre Achse drehbar sind.

6. Vorrichtung nach einem der Ansprüche 1 bis 5, **dadurch gekennzeichnet, dass** sie eine Rolle aufweist, welche an einem solchen Längsbereich des Wärmeleitprofils (11) an welchem schon das Rohr (2) in die Nut (11.1) eingebracht ist, an einer Wand (11.23, 21.23) anliegt und diese schwenkt.

## Claims

1. Device (3, 13) for mounting a pipe (2) in a groove (1.1, 11.1, 21.1) of a heat-conducting profile (1, 11, 21) through section-by-section movement of longitudinal sections of the pipe (2), perpendicular to its longitudinal direction and perpendicular to the profile direction of the heat-conducting profile (1), into the groove (1.1, 11.1, 21.1),
wherein the device (3, 13) features a roller (3.3) that has a tapered lateral surface and that projects onto the opening surface of the groove (1.1, 11.1, 21.1) and wherein, during mounting, the pipe (2) that is inserted into the groove (1.1, 11.1, 21.1) abuts the side of the tapered lateral surface of this roller (3.3) that is facing the groove (1.1, 11.1, 21.1),
**characterised in that**
- the device (3, 13) features a housing (3.6) that allows the heat-conducting profile (1, 11, 21) to be fed through in its profile direction and on which additional rollers (3.1, 3.2) are pivot-mounted on axes that are perpendicular to the profile direction of the heat-conducting profile, wherein
- at least two of these additional rollers (3.1, 3.2) on cross-sectional areas of the heat-conducting profile (1, 11, 21) that are spaced apart from one another abut the heat-conducting profile (1, 11, 21) under pressure and exert a bending force on the heat-conducting profile (1, 11, 21) around bending axes that are parallel to the profile direction, and this bending force increases the opening of the groove (1.1, 11.1, 21.1).

2. Device pursuant to claim 1, **characterised in that** the rollers that exert a bending force on the heat-conducting profile, against the roller that the pipe (2) to be inserted in the groove abuts, are positioned further forward on the heat-conducting profile in the direction of movement of the device.

3. Device pursuant to claim 1 or claim 2, **characterised in that** behind the roller (3.3) is an additional roller (3.7) with a tapered lateral surface that projects into the groove (1.1) on the heat-conducting profile (1).

4. Device pursuant to one of claims 1 to 3, **characterised in that** rollers (3.8) are arranged in the direction of movement of the device (13) on the heat-conducting profile (1) in front of the roller (3.3), through which the pipe (2) is inserted into the groove on the heat-conducting profile, and **in that** a longitudinal section of the pipe (2) that is not yet inserted into the groove (11.1) on the heat-conducting profile (11) abuts lateral surfaces of these rollers (3.8).

5. Device pursuant to one of claims 1 to 4, **characterised in that** one or more rollers (3.1, 3.2) that are pressing on the heat-conducting profile (1) can be rotated around their axis against the housing (3.6) with a motorised drive.

6. Device pursuant to one of claims 1 to 5, **characterised in that** the device features a roller which, on a longitudinal area of the heat-conducting profile (11) on which the pipe (2) is already inserted into the groove (11.1), abuts a wall (11.23, 21.23) and pivots this wall.

## Revendications

1. Dispositif (3, 13) pour monter un tube (2) dans une rainure (1.1, 11.1, 21.1) d'un profil conducteur de chaleur (1, 11, 21) par déplacement par tronçons des tronçons longitudinaux du tube (2) perpendiculaire à la direction longitudinale et perpendiculaire à la direction du profil du profil conducteur de chaleur (1) dans la rainure (1.1, 11.1, 21.1),
le dispositif (3, 13) comprenant un rouleau (3.3), dont la surface de revêtement est incurvée et s'approche jusqu'à la surface d'ouverture de la rainure (1.1, 11.1, 21.1) et lors du montage le tube (2) à insérer dans la rainure (1.1, 11.1, 21.1) reposant contre le côté tourné vers la rainure (1.1, 11.1, 21.1) de la surface de revêtement incurvée de ce rouleau (3.3),
**caractérisé en ce que**
- le dispositif (3, 13) comprend un boîtier (3.6), par lequel le profil conducteur de chaleur (1, 11, 21) peut être passé dans sa direction de profil et sur lequel d'autres rouleaux (3.1, 3.2) sont montés de façon à pouvoir pivoter autour des axes, qui sont perpendiculaires à la direction de profil du profil conducteur de chaleur,
- au moins deux des autres rouleaux (3.1, 3.2) étant sous pression au niveau des zones des surfaces transversales espacées du profil conducteur de chaleur (1, 11, 21) au niveau du profil conducteur de chaleur (1, 11, 21) et exerçant une force de flexion autour des axes pivotants parallèles à la direction de profil sur le profil conducteur de chaleur (1, 11, 21), par laquelle l'ouverture de la rainure (1.1, 11.1, 21.1) est élargie.

2. Dispositif selon la revendication 1, **caractérisé en ce que** chacun des rouleaux qui exercent une force de flexion sur le profil conducteur de chaleur, par rapport à chaque rouleau contre lequel repose le tube (2) à insérer dans la rainure, est situé un peu plus loin dans la direction du déplacement du dispositif au niveau du profil conducteur de chaleur.

3. Dispositif selon la revendication 1 ou la revendication 2, **caractérisé en ce que** derrière le rouleau (3.3) un autre rouleau (3.7) avec une surface de revêtement incurvée dépasse dans la rainure (1.1) au niveau du profil conducteur de chaleur (1).

4. Dispositif selon l'une des revendications 1 à 3, **caractérisé en ce que** les rouleaux (3.8) sont placés dans le sens de déplacement du dispositif (13) au niveau du profil conducteur de chaleur (1) devant le rouleau (3.3), par lequel le tube (2) est placé dans la rainure au niveau du profil conducteur de chaleur et **en ce qu'**au niveau des surfaces de revêtement de ces rouleaux (3.8) repose un tronçon longitudinal du tube (2), qui n'est pas encore inséré dans la rainure (11.1) au niveau du profil conducteur de chaleur (11).

5. Dispositif selon l'une des revendications 1 à 4, **caractérisé en ce qu'**un ou plusieurs rouleaux (3.1, 3.2) qui pressent contre le profil conducteur de chaleur (1) par rapport au boîtier (3.6) peuvent être pivotés autour de leur axe en étant entraînés par un moteur.

6. Dispositif selon l'une des revendications 1 à 5, **caractérisé en ce qu'**il comprend un rouleau, qui repose sur un tel segment longitudinal du profil conducteur de chaleur (11) sur lequel est déjà placé le tube (2) dans la rainure (11.1), contre un mur (11.23, 21.23) et pivote celui-ci.
